# EUROPEAN PATENT APPLICATION

(11) **EP 2 192 484 A1**
(43) Date of publication of application: **02.06.2010**
(21) Application number: 09004840.6
(22) Date of filing: 01.04.2009
(51) Int. Cl.: G06F 9/445

(54) **Method for executing scheduled task**

(30) Priority: 28.11.2008 TW 97146355
(71) Applicant: Avermedia Technologies, Inc., Taipei (TW)
(72) Inventor: Lin, Sheng-Chang, Chung Ho Taipei 235 (TW); Liu, Meng-Tze, Chung Ho Taipei 235 (TW)
(74) Representative: Winkler, Andreas Fritz Ernst

(57) **Abstract**

A scheduled task executing method is used in a computer system (2) and a peripheral device (25). The computer system (2) has a time generator (212) for generating time information and a memory (216). When the computer system (2) is in a working state, a user input interface is provided, a scheduled time is set via the user input interface, and the scheduled time is automatically stored in the memory (216). When the computer system (2) is in a power off state, electricity is continuously supplied to the time generator (212) and the memory (216). If the time information and the scheduled time comply with a specified relation, a power control signal is generated. In response to the power control signal, the computer system (2) is switched from the power off state to the working state. When the computer system (2) is in the working status, the peripheral device (25) is activated to execute a scheduled task item corresponding to the scheduled time.

## Description

The present invention relates to a method for executing a scheduled task, and more particularly to a method for automatically booting a computer system in a power off state and executing a scheduled task at a scheduled time.

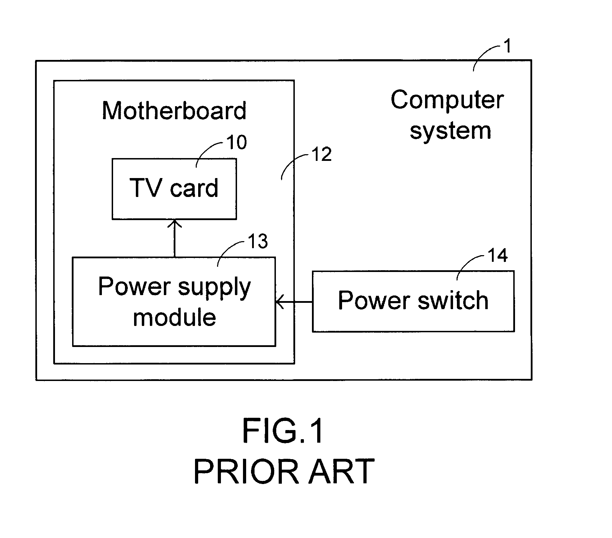

FIG. 1 is a schematic functional block diagram illustrating a computer system having a scheduled recording function according to the prior art. In the computer system 1, a TV card 10 and a power supply module 13 are mounted on a motherboard 12. Generally, a general TV card 10 provides a scheduled recording function. By an application program running under an operating system, the TV card 10 can record TV programs at a predetermined scheduled time. For executing the scheduled recording function, the power switch 14 of the computer system 1 should be manually turned on before the scheduled time, so that the power supply module 13 is triggered to provide electricity for starting the computer system 1. Alternatively, for executing the scheduled recording function, the computer system 1 needs to be maintained in a power-on status.

As known, a power management system is widely used to save power consumption in a computer system. Advanced Configuration and Power Management Interface (ACPI), which was published by Intel, Microsoft and Toshiba in 1996, is a specification defining standard interfaces for hardware configuration and power management of a power-saving system. According to the ACPI specification, the function of power management is integrated into the operating system.

The ACPI specification defines the following sixth states, including S0, S1, S2, S3, S4 and S5. S5 (Soft Off) is a power off state of the computer system, meaning that the computer system is not powered on. S0 is the normal working state of the computer, meaning that the computer system is booted and the operating system runs. When the computer system is idle in the working state, the computer system will enter the sleeping state in order to reduce power consumption. According to the time needed to bring the system back to the working state S0, the sleeping state is subdivides into the four states: S1 (Power on Suspend), S2 (Deeper Sleep), S3 (Standby or Suspend to RAM) and S4 (Hibernet or Suspend to Disk). The time needed to bring the system back to the working state S0 is shortest for S1, short for S2 and S3, and not so short for S4.

When the computer system 1 enters the above sleeping state S1∼S4, the operating system wakes up the computer system 1 through an application programming interface (API) so as to execute the further scheduled recording task. Since the computer system 1 in the sleeping state S1∼S4 still consume electrical energy, it is better to have the computer system 1 enter the power off state S5 in order to reduce power consumption of the idle computer system 1. When the computer system 1 enters the power off state S5, however, the operating system fails to wake up the computer system 1 through the API. Under this circumstance, the scheduled recording task cannot be successfully executed.

For solving the above drawbacks, a Wake on LAN (WOL) technology has been developed. By means of a network interface card (NIC) that supports the WOL technology, the user may use a remote sever to transmit a network wake-up packet (also referred as a magic pocket) to the NIC of the computer system. When the network wake-up packet is received by the NIC of the computer system, a control signal is issued to the motherboard. In response to the control signal, the computer system wakes and is switched from the power off state to the working state. The drawback of the WOL technology is that the computer system cannot wake itself up.

Another computer system having a scheduled recording function is disclosed in Taiwanese Patent No. I224283, and the contents of which are hereby incorporated by reference. In accordance with Taiwanese Patent No. I224283, an additional scheduled task setting device is required to wake up the computer system. The use of the scheduled task setting device increases the fabricating cost and wastes resources.

In Taiwanese Patent No. M271195, an addition control module is mounted on the TV card. The control module issues a power-on signal to the computer system through a peripheral component interface (PCI) bus. In response to the power-on signal, the voltage level at the power management event (PME) pin of the PCI bus is switched from a high-level state to a low-level state for example, thereby activating the computer system. Similarly, the use of the control module increases the fabricating cost and wastes resources.

Therefore, there is a need of providing a method for executing a scheduled task to obviate the drawbacks encountered from the prior art.

The present invention provides a method for automatically booting a computer system in a power off state and executing a scheduled task at a scheduled time, thereby meeting the environmentally friendly and power-saving demand.

Other objectives, features and advantages of the present invention will be further understood from the further technological features disclosed by the embodiments of the present invention.

In accordance with an aspect of the present invention, there is provided a scheduled task executing method for use in a computer system and a peripheral device. The computer system has a time generator for generating time information and a memory. The scheduled task executing method includes the following steps. When the computer system is in a working state, a user input interface is provided, at least a scheduled time is set via the user input interface, and the scheduled time is automatically stored in the memory. When the computer system is in a power off state, electricity is continuously supplied to the time generator and the memory. If the time information generated by the time generator and the scheduled time stored in the memory comply with a specified relation, a power control signal is generated. In response to the power control signal, the computer is switched from the power off state to the working state. When the computer system is in the working status, the peripheral device is activated so as to execute a scheduled task item corresponding to the scheduled time.

In an embodiment, the working status is an S0 status according to the ACPI specification, and the power off state is an S5 status according to the ACPI specification.

In an embodiment, the user input interface is provided by a schedule management program.

In an embodiment, the schedule management program is a terminate and stay resident program or a background service program.

In an embodiment, when the computer system is in the working status, the time information generated by the time generator is compared with the scheduled time stored in the memory by the schedule management program. If the time information is the same as the scheduled time, the peripheral device is activated to execute the scheduled task item corresponding to the scheduled time.

In an embodiment, after the scheduled task item is executed by the peripheral device, the schedule management program controls the computer system to be switched from the working state to the power off state or a sleeping state.

In an embodiment, the time generator for generating the time information is a real-time clock generator.

In an embodiment, the specified relation indicates that a time difference between the time information and the scheduled time is within a predetermined range.

In an embodiment, the specified relation indicates that a time difference between the time information and the scheduled time is zero.

In an embodiment, the specified relation indicates that a time difference between the time information and the scheduled time is equal to a specified time value.

In an embodiment, the peripheral device for executing the scheduled task corresponding to the scheduled time is a TV card. The scheduled task item includes a scheduled recording task, a scheduled TV/radio time shift recording task, a multimedia file playback task or a multimedia format transforming task.

In an embodiment, multiple scheduled times are set via the user input interface, and the latest scheduled time is automatically stored in the memory.

In an embodiment, the memory for storing the scheduled time is a complementary metal oxide semiconductor random access memory.

In accordance with the scheduled task executing method of the present invention, at least one scheduled task data is set via a user input interface provided by the schedule management program. After the scheduled task data are set, the schedule management program will decide the schedule of the scheduled task data according to the predetermined timing sequence. When the computer system is in the power off state and the scheduled time is due, the computer system is automatically booted and the scheduled task item is executed.

The above contents of the present invention will become more readily apparent to those ordinarily skilled in the art after reviewing the following detailed description and accompanying drawings, in which:
FIG. 1 is a schematic functional block diagram illustrating a computer system having a scheduled recording function according to the prior art;
FIG. 2 is a schematic functional block diagram illustrating a computer system having a scheduled recording function according to an embodiment of the present invention;
FIG. 3A is a flowchart illustrating the procedure of setting the scheduled task data by the schedule management program;
FIG. 3B is a flowchart illustrating the procedure of performing time comparison when the computer system is in the power off status; and
FIG. 3C is a flowchart illustrating the procedure of performing time comparison when the computer system is in the working status.

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

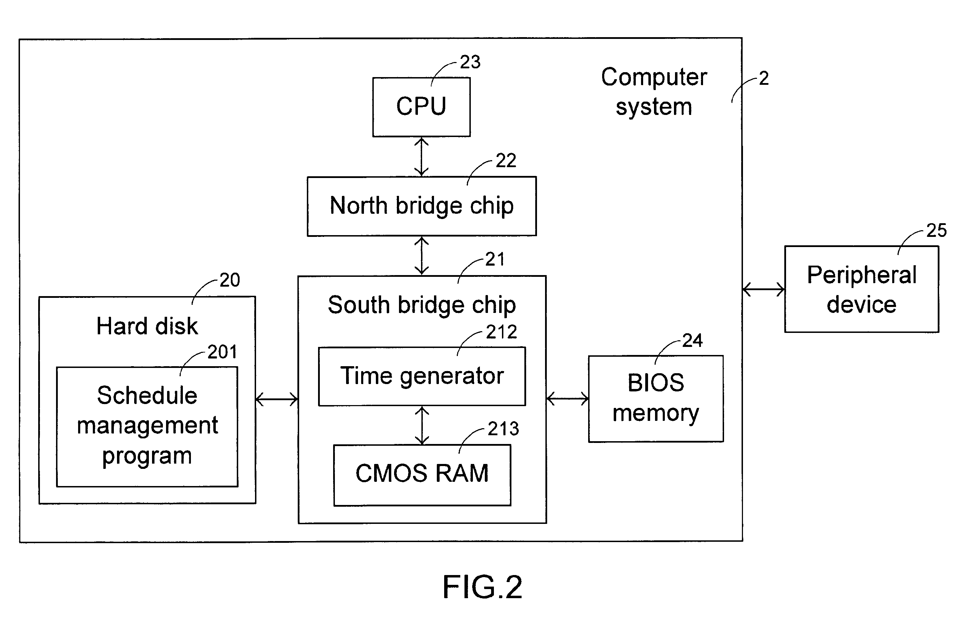

FIG. 2 is a schematic functional block diagram illustrating a computer system having a scheduled recording function according to an embodiment of the present invention. As shown in FIG. 2, the computer system 2 principally comprises a central processing unit (CPU) 23, a north bridge chip 22, a south bridge chip 21, a hard disk 20 and a basic input/output system (BIOS) memory 24. The south bridge chip 21 includes a time generator 212 and a complementary metal oxide semiconductor (CMOS) random access memory (RAM) 216. Moreover, a peripheral device 25 is communicated with the computer system 2. The peripheral device 25 is a built-in or external peripheral device of the computer system 2. An example of the peripheral device 25 is a TV card. Another example of the peripheral device 25 includes but is not limited to a projector, an audio device, a display device, a storage device, a printing device, a network device, a fax device, a scanning device, a communication device, an image pickup device, a video decoding device, a telephone system, and other computer system including wired or wireless communication device.

An example of the BIOS memory 24 includes but is not limited to an electrically erasable programmable read-only memory (EEPROM) or a flash memory. Since the BIOS memory 24 is readable, after the system parameters are set via a BIOS setup menu, the system parameters are usually stored in the CMOS RAM 216. On the other hand, the CMOS RAM 216 is a readable and writable memory for storing the current information associated with the hardware components of the computer system and the system parameters. Moreover, the CMOS RAM 216 is powered by a backup battery (not shown) of the computer system 2. Even if the computer system 2 is in the power off state or the input voltage of the computer system 2 is interrupted, the data stored in the CMOS RAM 216 will not be lost.

The time generator 212 is for example a real-time clock (RTC) generator for generating timing information. The real-time clock is usually used to keep track of the current time. Likewise, the time generator 212 is powered by the backup battery of the computer system 2. By means of the CMOS RAM 216 and the real-time clock generator 212, the computer system 2 that is in the power off state S5 will be automatically booted at the scheduled time. The scheduled time includes the columns of data and time. The scheduled time is stored in the CMOS RAM 216. By the time generator 212, the time information is obtained. If the time information generated by the time generator 212 and the scheduled time stored in the CMOS RAM 216 comply with a specified relation, the time generator 212 generates a power control signal. In response to the power control signal, the computer system is switched from the power off state S5 to the working state S0. In an embodiment, the specified relation indicates that the time information is the same as the scheduled time. Alternatively, the specified relation indicates that a time difference between the time information and the scheduled time is within a predetermined range (e.g. 10-30 seconds). The time generator 212 and the CMOS RAM 216 are powered by a backup battery of the computer system 2 even if the computer system 2 is in the power off state S5. In other words, the time generator 212 and the CMOS RAM 216 can be normally operated if the computer system 2 is in the power off state S5.

Conventionally, for automatically booting the computer system, the scheduled time is set via the BIOS setup menu and then stored in the CMOS RAM 216. For executing a executing a scheduled task according to the present invention, a user input interface is created when the computer system is in the working state S0. In an embodiment, the user input interface is provided by a schedule management program 201. Via the user input interface, the user can input one or more sets of scheduled task data, sort the scheduled task data according to the sequence of the scheduled times, and automatically store the timing of booting the computer system in the CMOS RAM 216. In other words, the user can change the timing of booting the computer system that is stored in the CMOS RAM 216 under the environment running the operating system, instead of using the BIOS setup menu.

The scheduled task data includes at least a scheduled time and a scheduled task item. The scheduled time can be set by the user and defined in minutes, seconds, milliseconds and hours according to a weekly schedule or a daily schedule. The scheduled task item performed by the peripheral device 25 (e.g. a TV card) at the schedule time includes for example a scheduled recording task, a scheduled TV/radio time shift recording task, a multimedia file playback task, a multimedia format transforming task, and so on.

After the scheduled task data are set, the schedule management program 201 will decide the schedule of the scheduled task data according to the predetermined timing sequence. That is, the schedule management program 201 will sort the scheduled tasks according to the scheduled time of the scheduled task data. The scheduled time of the latest scheduled task data is also stored in the CMOS RAM 216. For providing sufficient time period to booting the computer system 2, if the time information generated by the time generator 212 and the scheduled time stored in the CMOS RAM 216 comply with a specified relation, the time generator 212 generates a power control signal. In response to the power control signal, the computer system 2 is booted. In an embodiment, the specified relation indicates that the time difference between the time information and the scheduled time is zero. In another embodiment, the specified relation indicates that the time difference between the time information and the scheduled time is within a predetermined range (e.g. 10-30 seconds). In a further embodiment, the specified relation indicates that the time difference between the time information and the scheduled time is equal to a specified time value (e.g. 3 minutes). The time difference is reserved for booting the computer system 2. The time difference can be predetermined according to the settings of the schedule management program 201 or manually set by the user. Moreover, if the time information generated by the time generator 212 is the same as the scheduled time stored in the CMOS RAM 216, the schedule management program 201 will automatically enable the peripheral device 25 and control the peripheral device 25 to execute the scheduled task item corresponding to the scheduled time.

For example, three scheduled task data are inputted via the user input interface created by the schedule management program 201. These three sets of scheduled task data include: (1) a broadcast recording task at the 09:00 a.m., (2) a multimedia file playback task at the 06:00 a.m., and a TV program recoding task at 13:00 p.m. After the scheduled task data are set, the schedule management program 201 sorts the scheduled task data according to the sequence of the scheduled times (i.e. 2 > 1 >3). The scheduled time of the latest scheduled task data (i.e. 06:00 a.m.) is stored in the CMOS RAM 216. For example, the specified relation indicates that the time difference between the time information and the scheduled time is equal to 3 minutes. If the time difference between the time information generated by the time generator 212 and the scheduled time stored in the CMOS RAM 216 is equal to 3 minutes, the computer system 2 is booted. When the computer system 2 is in the power off state, if the time information generated by the time generator 212 is 05:57 a.m., the time generator 212 will generate a power control signal. In response to the power control signal, the computer system 2 is switched from the power off state S5 to the working state S0.

The schedule management program 201 used in the present invention is a terminate and stay resident (TSR) program or a background service program. After the computer system 2 is switched from the power off state S5 to the working state S0, the schedule management program 201 is automatically downloaded into the computer system 2. After the schedule management program 201 is activated, the schedule management program 201 will discriminate whether the time information generated by the time generator 212 is the same as the scheduled time stored in the CMOS RAM 216. If the time information is the same as the scheduled time, the schedule management program 201 will automatically enable the peripheral device 25 and control the peripheral device 25 to execute the scheduled task item corresponding to the scheduled time.

Moreover, after the scheduled task data are set, the scheduled time is automatically stored in the CMOS RAM 216. If the computer system is in the working state S0, the schedule management program 201 will continuously discriminate whether the time information generated by the time generator 212 is the same as the scheduled time stored in the CMOS RAM 216. If the time information is the same as the scheduled time, the schedule management program 201 will automatically enable the peripheral device 25 and control the peripheral device 25 to execute the scheduled task item corresponding to the scheduled time. On the other hand, if the computer system is in the sleeping state S1∼S4, the schedule management program 201 will wake up the computer system 2 through an application programming interface (API). Until the computer system 2 enters the working state S0, the schedule management program 201 will automatically enable the peripheral device 25 and control the peripheral device 25 to execute the scheduled task item corresponding to the scheduled time.

When the computer system 2 is in the power off state S5, the computer system 2 is automatically booted according to the scheduled time stored by the schedule management program 201 and then enters the working state S0. Next, the schedule management program 201 will automatically enable the peripheral device 25 and control the peripheral device 25 to execute the scheduled task item corresponding to the scheduled time. On the other hand, if the computer system is in the sleeping state S1∼S4, the schedule management program 201 will wake up the computer system 2 such that the computer system 2 enters the working state S0 and the schedule management program 201 enables the peripheral device 25 and controls the peripheral device 25 to execute the scheduled task item corresponding to the scheduled time. If the computer system is in the working state S0, the schedule management program 201 will directly enable the peripheral device 25 and control the peripheral device 25 to execute the scheduled task item.

After the current scheduled task item is performed, the schedule management program 201 will automatically store the next set of scheduled task data in the CMOS RAM 216 according to the sequence of the scheduled times, thereby assuming that the next scheduled task is executable when the computer system 2 is in the working state S0. Moreover, whenever a new scheduled task data is added, the current scheduled task data and the new scheduled task data are combined and re-sorted. After the current scheduled task data and the new scheduled task data are re-sorted, the scheduled time of the latest scheduled task data is also stored in the CMOS RAM 216.

On the other hand, if the timing of automatically booting the computer system is stored in the CMOS RAM 216 via the BIOS setup menu, the schedule management program 201 will read the timing of automatically booting the computer system when the scheduled time is stored. Next, the automatic booting time and the current scheduled task data are combined and re-sorted. After the scheduled task item corresponding to the scheduled time is executed, the automatic booting time is re-stored in the CMOS RAM 216.

For example, it is assumed that the timing of automatically booting the computer system is set to be 09:00 p.m. via the BIOS setup menu and stored in the CMOS RAM 216. If the schedule management program 201 intends to store the scheduled time (e.g. 06:00 p.m.) in the CMOS RAM 216, the schedule management program 201 will read the automatic booting time (09:00 p.m.). Next, the automatic booting time (09:00 p.m.) and the scheduled time (06:00 p.m.) are combined and re-sorted. After the scheduled task item corresponding to the scheduled time (06:00 p.m.) is executed, the automatic booting time (09:00 p.m.) is re-stored in the CMOS RAM 216. Whereas, if the schedule management program 201 sets another scheduled task item corresponding to a next schedule time (e.g. 07:00 a.m.) that is prior to the automatic booting time, after the scheduled task item corresponding to the scheduled time (06:00 p.m.) is executed, the next schedule time (e.g. 07:00 a.m.) is stored in the CMOS RAM 216. After the scheduled task item corresponding to the next scheduled time (07:00 p.m.) is executed, the automatic booting time (09:00 p.m.) is re-stored in the CMOS RAM 216. In other words, the scheduled task executing method of the present invention can set the scheduled task data under the operating system. Even if the automatic booting time is set via the BIOS setup menu, there is no contradiction among different techniques.

Moreover, according to the settings inputted by the schedule management program 201, the computer system 2 may enter the sleeping state S1∼S4 or the power off state S5 after the scheduled tasks are implemented.

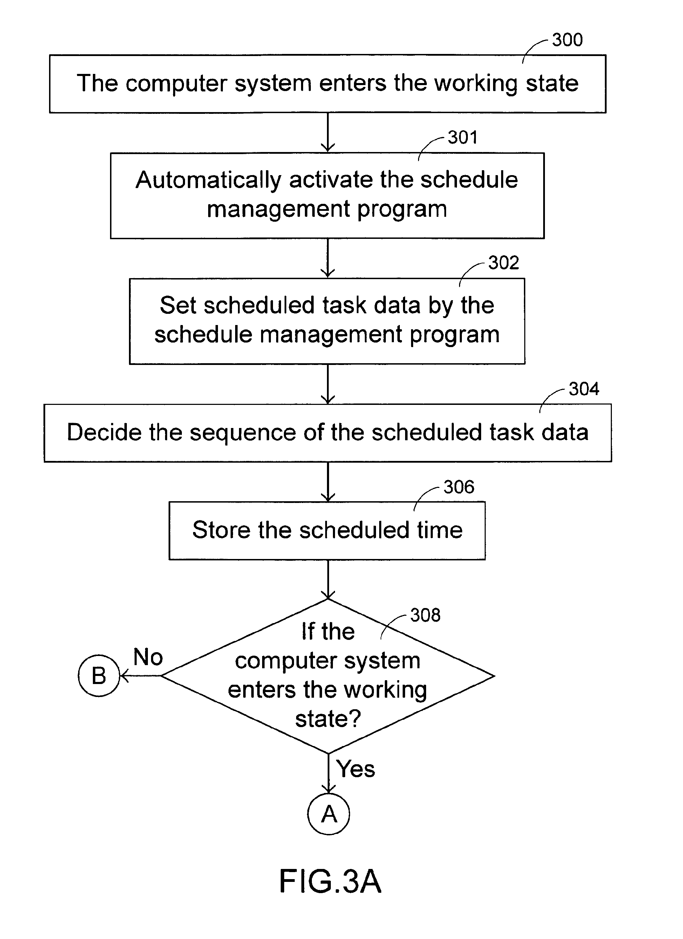

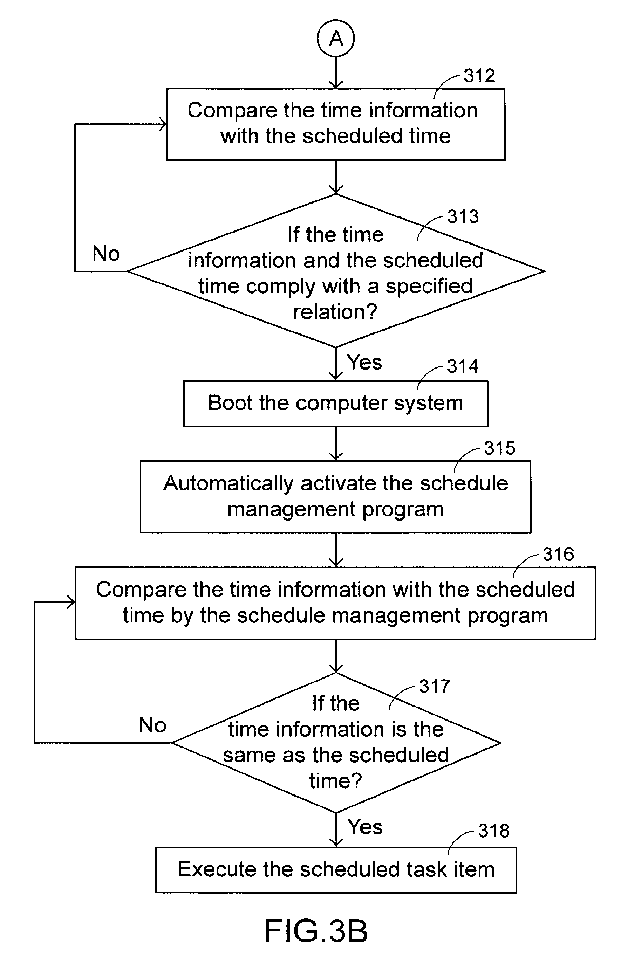

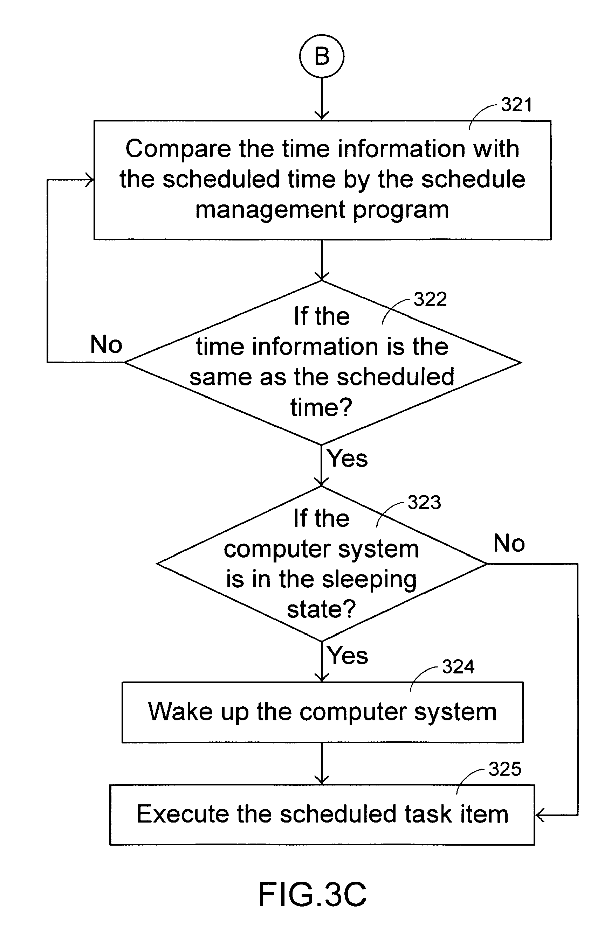

Hereinafter, a flowchart of a scheduled task executing method according to the present invention will be illustrated with reference to FIGS. 3A, 3B and 3C. FIG. 3A is a flowchart illustrating the procedure of setting the scheduled task data by the schedule management program. After the computer system 2 is booted and enters the working state (Step 300), the schedule management program is automatically activated under the operating system (Step 301). Next, one or more sets of scheduled task data are set via the user input interface provided by the schedule management program 201 (Step 302). Next, the schedule management program 201 will decide the sequence of the scheduled task data according to the scheduled time sequence (Step 304). Next, the scheduled time of the latest scheduled task data is stored in the CMOS RAM 216 (Step 306). After the procedure of setting the scheduled task data is implemented, the computer system 2 may enter the power off status or continuously in the working state. If the computer system 2 enters the power off status, the flowchart enters the node A. If the computer system 2 does not enter the power off status, the flowchart enters the node B.

FIG. 3B is a flowchart illustrating the procedure of performing time comparison when the computer system is in the power off status. When the computer system 2 is in the power off status, the time information generated by the time generator 212 is compared with the scheduled time stored in the CMOS RAM 216 (Step 312). If the time information and the scheduled time comply with a specified relation (e.g. a time difference between the time information and the scheduled time is shorter than 3 minutes) (Step 313), the time generator 212 generates a power control signal. In response to the power control signal, the computer system 2 is switched from the power off state S5 to the working state S0 so that the computer system is booted (Step 314). After the computer system 2 enters the working state S0, the schedule management program 201 is automatically activated (Step 315), and the schedule management program 201 continuously compares the time information with the scheduled time (Step 316). If the time information is the same as the scheduled time (Step 317), the schedule management program 201 will automatically enable the peripheral device 25 and control the peripheral device 25 to execute the scheduled task item corresponding to the scheduled time (Step 318).

FIG. 3C is a flowchart illustrating the procedure of performing time comparison when the computer system is in the working status. When the computer system 2 is in the working status, the schedule management program 201 continuously compares the time information with the scheduled time (Step 321). If the time information is the same as the scheduled time (Step 322) and if the computer system 2 is in the sleeping state S1∼S4 (Step 323), the schedule management program 201 will wake up the computer system 2 through an application programming interface (API) (Step 324). Until the computer system 2 enters the working state S0, the schedule management program 201 will automatically enable the peripheral device 25 and control the peripheral device 25 to execute the scheduled task item corresponding to the scheduled time (Step 325).

From the above description, the scheduled task executing method of the present invention can automatically boot the computer system when the computer system is in the power off state and then execute the scheduled task item by using a schedule management program. As a consequence, the scheduled task executing method can meet the environmentally friendly and power-saving demand.

While the invention has been described in terms of what is presently considered to be the most practical and preferred embodiments, it is to be understood that the invention needs not to be limited to the disclosed embodiment. On the contrary, it is intended to cover various modifications and similar arrangements included within the spirit and scope of the appended claims which are to be accorded with the broadest interpretation so as to encompass all such modifications and similar structures.

The features disclosed in the foregoing description, in the claims and/or in the accompanying drawings may, both separately and in any combination thereof, be material for realizing the invention in diverse forms thereof.

## Claims

1. A scheduled task executing method for use in a computer system (2) and a peripheral device (25), the computer system (2) having a time generator (212) for generating time information and a memory (216),
**characterized in that** the scheduled task executing method comprises steps of:
providing an user input interface when the computer system (2) is in a working state, setting at least a scheduled time via the user input interface, and automatically storing the scheduled time in the memory (216);
continuously supplying electricity to the time generator (212) and the memory (216) when the computer system (2) is in a power off state;
generating a power control signal if the time information generated by the time generator (212) and the scheduled time stored in the memory (216) comply with a specified relation, wherein the computer system (2) is switched from the power off state to the working state in response to the power control signal; and
activating the peripheral device (25) when the computer system (2) is in the working status, thereby executing a scheduled task item corresponding to the scheduled time.

2. The scheduled task executing method according to claim 1, **characterized in that** the working status is an S0 status according to the ACPI specification, and the power off state is an S5 status according to the ACPI specification.

3. The scheduled task executing method according to claim 1, **characterized in that** the user input interface is provided by a schedule management program (201).

4. The scheduled task executing method according to claim 3, **characterized in that** the schedule management program (201) is a terminate and stay resident program or a background service program.

5. The scheduled task executing method according to claim 4, **characterized in that** when the computer system (2) is in the working status, the time information generated by the time generator (212) is compared with the scheduled time stored in the memory (216) by the schedule management program (201), and if the time information is the same as the scheduled time, the peripheral device (25) is activated to execute the scheduled task item corresponding to the scheduled time.

6. The scheduled task executing method according to claim 5, **characterized in that** the schedule management program (201) controls the computer system (2) to be switched from the working state to the power off state or a sleeping state after the scheduled task item is executed by the peripheral device (25).

7. The scheduled task executing method according to claim 1, **characterized in that** the time generator (212) for generating the time information is a real-time clock generator.

8. The scheduled task executing method according to claim 1, **characterized in that** the specified relation indicates that a time difference between the time information and the scheduled time is within a predetermined range.

9. The scheduled task executing method according to claim 1, **characterized in that** the specified relation indicates that a time difference between the time information and the scheduled time is zero.

10. The scheduled task executing method according to claim 1, **characterized in that** the specified relation indicates that a time difference between the time information and the scheduled time is equal to a specified time value.

11. The scheduled task executing method according to claim 1, **characterized in that** the peripheral device (25) for executing the scheduled task corresponding to the scheduled time is a TV card, and the scheduled task item includes a scheduled recording task, a scheduled TV/radio time shift recording task, a multimedia file playback task or a multimedia format transforming task.

12. The scheduled task executing method according to claim 1, **characterized in that** multiple scheduled times are set via the user input interface, and the latest scheduled time is automatically stored in the memory (216).

13. The scheduled task executing method according to claim 1, **characterized in that** the memory (216) for storing the scheduled time is a complementary metal oxide semiconductor random access memory.
